# EUROPEAN PATENT APPLICATION

(11) **EP 0 748 651 A1**
(43) Date of publication of application: **18.12.1996**
(21) Application number: 95401535.0
(22) Date of filing: 27.06.1995
(51) Int. Cl.: B01J 2/14, C05G 3/00, C05D 1/00

(54) **Process for pan granulating a particulate material**

(30) Priority: 12.06.1995 CA 2151569
(71) Applicant: Derdall, Gary, Saskatoon, Saskatchewan (CA); Ma, Siu L., Saskatoon, Saskatchewan, S7K 4C7 (CA)
(72) Inventor: Derdall, Gary, Saskatoon, Saskatchewan (CA); Ma, Siu L., Saskatoon, Saskatchewan, S7K 4C7 (CA)
(74) Representative: Desaix, Anne

(57) **Abstract**

Industrial materials can be efficiently pan granulated by grinding the material to 95% minus 150 mesh, feeding this to a pan in conjunction with 1 to 15% seed materials and applying binder solution such that the free moisture content of the green ball is between 8-13% by weight of the feedstock. The granules build up on the seed to a desired size range, say -5 to +8 mesh, in an onion skin manner. Product is sent preferably to a fluid bed dryer for drying. The productivity and classification is very high with yields up to 95% for two mesh size ranges, such as -5 to +8 mesh.

## Description

### BACKGROUND OF THE INVENTION

This invention relates to a process for pan granulation, a simple and novel mechanical configuration, and operation of the pan. The granulation process can be used with binders to produce narrowly sized granules of superior hardness and density with high efficiencies and production rates.

There are many patents in the prior art such as U.S. 3,711,254; U.S. 4,589,904; U.S. 4,743,289; D.E. 3,623,321; U.S.S.R. SU 1,567,558; DD 243,274; U.S.S.R. SU 1,468,890; PCT Int. Appl. WO 89 04,291-US Application 15,920 (Nov. 02, 1987). All these patents use different processes and mechanical arrangements to carry out granulation, yet almost without exception these patents are specific to one product, as with U.S. 3,711,254 or U.S.S.R. SU 1,468,890, both of which are specific to potash. In addition, the low yields of 20-50% experienced and claimed (e.g. U.S. 3,711,254) and the complexity of the mechanical circuits (previous citation) indicate that there is not an adequate understanding of the chemistry, physics and mechanical equipment in the current art to provide industry with the right technology.

Some patents have used the notion of a seed about which a core can be built up to produce a granule, such as U.S. 3,711,254 for potash or DE 3,623,321 for sugar. Neither patent teaches that if the process concept and mechanical flowsheet are properly done, a whole range of industrial materials can be economically granulated in high yield. In US 3,711,254, McGowan et al. use external seeding in forming potash granules. In spite of prior art available and compiled in Perry's Chemical Engineering Handbook, 3rd Edition, McGowan et al. were unable to produce pan granules of adequate quality and yield with stand alone pan granulation. They devised a process combining pan granulation and a drum roller wherein granules from the pan were conditioned or processed in the drum to produce product of improved quality. The yield of on spec product was quite variable and very sensitive to operating conditions of the drum roller. The process was contingent upon the drum roller since it was stated that a drum granulator could be used to feed the drum roller.

The plethora of patents in the area of granulation along with the comparatively narrow range of products suitable for each patent is testimony to the need for a simple and effective system that can granulate a wide range of materials.

The objects of the invention are to achieve superior economic performance in the preparation of narrowly sized particles for a wide range of industrial materials. The narrowly sized particles can be produced over a wide span of granular mesh size ranges.

### SUMMARY OF INVENTION

In this invention, art is disclosed whereby most any industrial material, including fertilizers, chemicals and minerals, may be granulated in very high yield by a new process that is used in conjunction with a specially designed pan granulation system.

Accordingly, this invention provides a process for pan granulating a particulate material, wherein the process comprises:
(a) providing particulate material having a size of about 95% minus 150 mesh and 90% minus 200 mesh or finer;
(b) feeding the particulate material from step (a) to a pan granulator containing about 1% to about 4% by weight seed material having a size of -14 to +35 mesh;
(c) feeding a binder solution to the pan granulator containing an amount of binder of about 0% to about 4% by weight of the particulate material; and
   treating the particulate material in the pan granulator to form an enlarged particulate material about 90% by weight or greater of which has a particle size distribution of about -5 to about +10 mesh.

The mesh sizes referred to herein are based on the Tyler Sieve Series.

It is believed that the unique aspects of the process along with the simplicity and process control facilitated by the mechanical circuit enables the production, in a uniform manner, of a wide range of industrial materials. From the experiments so far, it may be that most, if not all industrial materials can be economically granulated by these techniques.

### DETAILED DESCRIPTION OF PREFERRED EMBODIMENTS

Many industrial materials need and in some cases are required to be marketed in a granular form that is stable to handling and various weather conditions. In one embodiment of the invention, the desired industrial material is first ground, preferably by an air sweep pulverizer or equivalent technology, to 95% minus 150 mesh and 90% minus 200 mesh. The material usually need not be ground any finer. Any significant amounts of material in the +150 mesh range appear to serve as nuclei in granulation and disturb the process of controlled nucleation provided by this invention.

Water or binder solution is introduced by atomizing sprays at between 8-14% w/w, but preferably at 10-12%, by weight. Finer material can be handled as feedstock or product needs require, but the productivity of a given pan granulating system declines as the proportion of finer material increases. Finer material takes longer to build up an appropriately sized granule.

The material from the air sweep pulverizer can be conveyed to an active bottom hopper located at a height similar to the bottom of the pan granulator. The feedstock can then be metered with an auger onto the pan at about the 5 o'clock position so that there is minimal vertical drop. The feedstock flow rates are maintained at a uniform rate by the use of vibrators. Sometimes it is desirable to use about 2% moisture blended in the feedstock to prevent dusting of finer particulate material.

This process then introduces seed, typically between -14 and +28 mesh in size to control granule growth, at about the 1:30 position or behind a scraper at 2:30. The former seed can be moistened by water and/or binder solution added inboard of the three o'clock position with the pan spinning in a clockwise direction. Seed at the 2:30 position goes onto the pan in dry form. This additional point is used to minimize mutual agglomeration of seed in some cases. The powder feedstock for granulation is not fed to the pan at the same location on the pan as the seed. With seed addition outside the granulation bed in this manner, seed addition can be readily altered in response to changing conditions in the bed where increased or decreased growth may be required. With proper dust sizing and controlled seeding, high yields are obtained.

The wet seed directly from the 1:30 position and indirectly from the 2:30 position builds up the granule in a thin film or onion skin fashion until it is an appropriate size and discharged from the pan to a belt conveyor to a dryer. Although several types of dryers can be used, an appropriate piece of equipment is a Carrier fluidized bed dryer. After drying, the product is screened with on-size material going to a product bin.

The unique characteristic of this mechanically simple granulation system is that, for example, size yields of higher than 90% of -5 to +8 mesh product have been achieved on an 8 foot pan. Smaller mesh sizes can be made with finer seed and/or more seed crystals as noted before.

The materials in this application that have been studied range from very soluble materials, such as sodium and potassium chloride, which are also quite polar, to relatively insoluble material, such as potassium sulphate, to insoluble, nonpolar materials like elemental sulphur. Also, polar but relatively insoluble materials, like kaolin and magnesia and magnesium carbonates, can be granulated. Prior art does not teach that this wide range of materials can be processed into granules of variable but narrow size ranges and with no or minimal amounts of binder in high yield. For example, white potash can be made into large granules from 5 mesh to a half inch in a two step process with no binder.

The process concept used in this invention is granulating fine material in an onion skin or thin film fashion around a seed core which is -14 to +35 mesh, and preferably in the -14 to +28 mesh range. It may be more difficult to keep the granulation steady or stable with fine seed, such as -35 mesh. The seed should have a normal distribution of sizes in these ranges. A normal distribution would be the sizes formed in such a cut of an ammonium sulphate or potash standard product.

The granules produced by this process have a tiny but visible core from the seed material. Properly sized seed crystal is fundamental to the operation of this granulation process. Seed of large size forms granules of very poor strength. With a fixed feed rate and moisture content from the binder solution, the rate of flow and the precise sizing of the seed controls the granulation process of the pan. Fine seed sizes can be used, such as +35 mesh, but a point is reached where over-seeding or nucleation occurs easily and causes the final product yield to drop down. The seed material, as a practical matter, is usually prepared by taking material, such as standard grade potash or ammonium sulphate, and removing the -14 mesh and +28 mesh material for seed. Because of the usual size distribution of these materials, the bulk of the seed material is in the +20 to -28 mesh size range. Seed material in the range of 20 mesh is the best single point for each of control and uniformity of product size distribution, but it will be understood that 100% of material of this size may be difficult to obtain for practical reasons. Keeping a narrow size range for the seed will minimize the tendency for the product distribution to broaden. The more uniform the seed size, the more uniform in size that the product is. Overall product size is controlled by the amount and sizing of the seed. More seed and finer seed leads to smaller sized product. Thus, for example, with a given seed size, such as 20 mesh, a faster rate of addition to the pan alone will give a smaller size product. The process operates completely at room temperature, and this in itself distinguishes the process from much of the prior art, as with U.S. Patent 3,711,254.

Product yields typically run 90% and higher. Yield is the weight percent of material out of the drier that is within granular specification. This is usually -5 mesh to +10 mesh. While this range is specified as generally applicable to this invention, the invention can produce 90% yields within two size ranges, such as -6 to +8 mesh or -8 to +10 mesh. For example, yields of 98% of -6 to +10 mesh material and yields of 95% of -5 to +8 mesh product can be obtained by the process of this invention. Some materials give better yields than others. Ammonium sulphate yields are typically 95% of -6 to +8 mesh material, whereas sulfur yields are about 90% of -6 to +10 mesh material.

The process of this invention enables full and complete process control of granulation by layering to produce products in a narrow size range in a single pass. Single pass means the primary yield with substantially no recycle employed. This enables the economic use of pan granulation for materials like fertilizers. In prior art pan granulation processes, recycle or multiple pass of growing balls has been required because the primary yield was only 25-40%. In the process of this invention, the primary yield of desired material is about 90% or more, and the off-spec material is usually 10-12 mesh size that can be sold as a smaller grade of product. This invention thus makes it possible to make high yields of on-spec material in a single pass without significant recycle.

The feedstock of fine material, which is also referred to herein as dust or powder, is 95% -150 mesh and preferably 90% -200 mesh. The powder feedstock for granulation to the pan can be finer than -200 mesh, and may need to be with say kaolin or sulphur; however, the productivity in t/hr of the pan decreases because more layers must be built up around the seed. Some materials, such as kaolin, are 2 micron in size and are very difficult to handle in bulk because they are so fine. Even this material can be granulated when properly metered to the pan. This requires increased residence time to achieve similarly sized granules. If the feedstock is predominantly -200 mesh material, it is possible to eliminate the air sweep pulverizer and go straight to a fines bin and then onto the pan. This could apply to material, such as flour, magnesium oxide and kaolin.

Additives, such as magnesium oxide, zeolites, or diatomite, can be added to the air sweep pulverizer to ensure that the pulverizer dust does not cake up due to moisture or electrostatic charges. Typical amounts are in the range of 0.05% to 0.5%. The use of such additives is part of the art to ensure that the granulation process works properly.

For stable operation of the pan in this granulation process, it is imperative that the feed to the pan be consistent in terms of mass per unit time as well as sizing. Pulsating feed rates will upset the pan and produce off-spec product. Depending upon the material, slugs of material will cause dust on the pan and produce a significant amount of off-size product if seed rate and moisture are not adjusted correctly.

The seed material is not critical in its composition and can be drawn from a range of materials when a suitable binder is employed. Seed material is usually taken from readily available material, such as standard product or fines from the production of potash or ammonium sulphate. Blends of material, such as ammonium sulphate and sulphur, can be granulated in high yields of 90% -5 to +10 mesh. Seed from the seed bin is fed to the granulation pan via a variable speed screw feeder. This is an important aspect to the overall process in terms of controlling the bed and the product produced from the pan. The feed rate of the seed is how the pan, the bed on the pan and the product yield are controlled provided that the dust feedstock rate and moisture are steady. Variable positioning of seed entry is critical to being able to granulate a wide range of materials.

Too much seed will result in more undersize product. Too little seed can result in a large amount of oversize product and fines. Thus, the seed feed rate and sizing are an important control variables. A change in the granular product size range can be achieved by changing the amount of seed to the pan. Industrial materials can be efficiently pan granulated by grinding the material to 95% -150 mesh, feeding this to a pan that contains 1% to 15% seed material by weight of powder fed to the pan, and applying binder if needed. The preferred seed feed rate is 1% to 4% by weight based on the weight of the dust fed to the pan granulator for seed in the +14 to -28 mesh range. Finer seed requires a lower percent seed because there are more nuclei. Thus, for example, seed of 28 mesh may only require 0.5% to 1% by weight seed, whereas seed of +14 mesh may require 5% or more seed. The seed feed rate and sizing are such that the process is controllable; the finer the seed, the less that is used, but due to small variations in seed rate, the pan becomes prone to inappropriate nucleation rates as seed size gets above 28 mesh, and this can lead to fines and lower yields. Thus, about 0.2% w/w may be required with +35 mesh seed. It is used to make short term adjustments to size distribution of the green balls to ensure that the product coming off the pan is on-spec. Addition of seed material will bring a pan to a granulation state in as little as 15 minutes on an 8 foot pan.

In some cases, an aqueous solution of the material being granulated can be used as a binder. In other cases, special binders must be used. In general, most conventional binders, such as starch, expanded starch or lignosulphonates, will work well as binders in this process. Because of the unique nature of this granulation process, sometimes no binder at all is needed.

If needed, binder can be fed to the pan via a series of sprayers. It has been found that atomizing sprayers in three parallel rows of two sprayers apiece gives sufficient operational flexibility to adjust for most variations in feed rate. The moisture is held to between 8% and 14% w/w with 10-12% being preferred for the broad range of materials tested. Water of hydration is considered as bound water since this process operates, uniquely, at room temperature. This means that overall water contents can be higher for some products.

Some binders, such as dried expanded starch or dried lignosulfonates, can be added with the feedstock to the pan. This can enable lumpy solids to be used as well as preclude plugging of spray nozzles due to binder.

When needed, the binder level can usually be kept at between 0.02% and 4% w/w, typically no more than 0.5 to 1% w/w, overall in the dry product and still achieve good product break strengths. Other systems typically use between 4 and 13% binder with 4-6% being common. With the low binder levels, and in some cases such as high grade potassium chloride where none is used, this process offers significant advantages in terms of required product purities, such as for fertilizers and industrial chemicals.

The process of this invention frequently needs no more than 0.02%-2% of common binders, such as hydrolyzed starch or lignosulphonates, to achieve granule break strength in the range of 6-9 pounds. This strength is twice the generally accepted values of 3-5 pounds for granular fertilizers. Break strength is the force required to fracture a particle. There are commercial devices available, wherein a single particle is placed in a device and a lever is used to apply force until the particle breaks. Break strength can also be approximated by placing weights on top of the particle on a balance until the particle breaks. Break strength is also affected by seed size. When seed of the specified size is employed in the process of the invention, the granules are quite strong with 6-8 pound break strengths and do not fracture easily.

In the process of this invention, the pan functions as a balling device in which granule growth occurs through internal recycle based upon controlled seeding to the pan and size segregating capability on the pan. Internal recycle refers to the growth of the wet granule or so-called green ball on the pan. Segregation means that small particles roll around the face of the pan picking up binder and moisture until they come to reside at the bottom of the granulation bed, growing gradually until they rise vertically to the surface of the bed, and then exit as product. If seeding, growth, and segregation do not properly occur, the pan produces a wide range of sizes due to a metastable bed. The pan may cycle from on-size to off-size product due in part to over and under nucleation. In the process of this invention, the green balls in a narrow size range grow on the pan and spill over in high yield because of correct feed stocks and geometric arrangements of the pan.

After the binder, seed and feed are properly mixed, a bed develops on the pan and product is driven off by centrifugal force. Having a deeper bed on the pan has some advantages in that it gives the system ballast from variations in feed rate and/or size. Variations in feed rate and size or feedstock composition variations can be accommodated by adjusting primarily the seed rate and secondary percentage of binder before significant amounts of off-spec product granules enter the drying system.

A 4 foot pan can be rotated at between 25 and 35 rpm to give good product densities, while an 8 foot pan has been found to operate well at between 12 and 18 rpm. An eight foot pan can be rotated at higher than 15 rpm and still produce high yields of on-spec product at higher production rates. Pans having a diameter of 12 feet are estimated to need rotational speeds of 8 to 12 rpm to provide a bed that will deliver product of the requisite density and break strength. Higher pan speeds are also important in generating increasing amounts of centrifugal force to produce granules with high bulk densities.

The bed itself can have its formation and stability enhanced by tilting the plane of the bed 0 to 10 degrees by dropping the side of the pan that you want the bed on. Facing the pan, this would be left side if the pan was rotating in a clockwise manner.

The feed rate of powder to the pan granulator depends upon the equipment size being employed and on the rate of granule growth. Pan granulators come in various sizes specified usually by diameter. Diameters range up to 22 feet and can take up to 15 to 20 tons per hour. Smaller pans, such as 8 foot diameter pan granulators, can take about 6 tons per hour. There is no overall preferred feed rate, except for the given pan diameter. It has been found that about 4 tons per hour on an 8 foot diameter pan granulator produces satisfactory results, but higher feed rates can be employed. The pan granulator can be of standard commercial design. Pan granulators manufactured by Ferrotech and Teledyne are suitable. It should be understood that for a given size pan granulator, this invention makes it possible to operate at higher feed rates than prior art processes, such as feed rates 20% to 30% higher, primarily because the output of on-spec material is high.

While the most important control variables on the pan are the rate of feed and sizing and location of addition of the seed crystal, an important and unique feature of a pan granulator over a drum granulator is the ability of the pan to segregate product and selectively remove on-size product. It has been observed that segregation of particles by size occurs across the face of the pan and vertically in the bed. In this invention, the unit operation of segregation on the pan improves significantly with the addition of three pinch points or scrapers at the 9:30-10 o'clock position, and at the 11 and 1 o'clock positions. This is particularly desirable when increasing pan output beyond normal pan design parameters for a given output. The momentum of on-specification granules is broken by the pinch points and the granules cascade down to the bed across the face of the pan. Pans typically have two motor driven rotary scrapers at the 3 o'clock position. These are undesirable and are not needed in this invention. The motor driven scrapers impair the classification action of the pan.

If the pinch points are not there, on-size product can begin to rotate with the feed material, stick together and form large agglomerates. These agglomerates can impair the stable and efficient functioning of the bed and lead to oversize product. These pinch points on the pan, then, are essential to obtaining classification with the pan operating at higher pan speeds that yield higher throughput. This is part of the process of this invention and is used to ensure that high yields of evenly sized product come off the pan granulator.

In addition to the pinch points and lack of motorized scrapers impairing product segregation in a horizontal manner, introduction of seed at the 12:30-2:30 position, (either inboard or outboard) and downstream of the nominal 2 o'clock scraper is desirable. Dry seed comes into contact with wet dust in the bed, which is typically in the 6-9 o'clock position. With some materials this is the preferred method of retaining the seed in the bed until a desirable size is reached. Entry at the 2:30 position can be preferred for some materials where entry at the 1:30 position can cause significant seed agglomeration requiring high and undesirable levels of seed. When the seed entry is positioned apart from the entry of powder on the pan, the seed will not be directly consumed and destroyed by the powder, because the seed is on the bottom of the pan and will circulate and grow evenly.

While many steps can be taken to minimize process upsets, these do happen and the granulation process has to cope with it. A moving rake or similar device, and attached to the frame of the pan, scoops out any large balls that have been formed due to process upsets. These oversize balls must be removed from the bed so that they do not continue to agglomerate with smaller product. The larger balls can crush on specification and smaller product and prevent it from growing to on-size material.

Once on-size product moves off the pan, it goes by a stream to say a Carrier fluidized bed dryer. A reversible conveyor at the pan can be run in the other direction to dispose of off-spec material that can be formed during start-up or process upset. As noted earlier, the preferred dryer is a fluidized bed model, such as produced by Carrier of Louisville, Kentucky. Alternatively, a rotolouver dryer can be employed.

The dryer has exits for dust and product. The dust goes to recycle in binder sprays. With appropriate binders, the amount of dust is comparatively small amounting typically to 5% or less. Levels of 1 and 2% have been observed.

In one option, the product is fed from the dryer directly to a product bucket elevator for screen sizing. Some products are inherently dusty and need reagentizing to ensure that there is minimal dusting on handling. Anti-caking materials can also be added in the dedusting step. On-spec product can thus go to an intermediate reagentizing drum or directly to product storage. In another option, the product is surface coated right after the dryer. The process of this invention can, in general, be characterized as a continuous process. The pan granulation can be stopped and started easily, however, unlike prior art processes.

In a typical 10 tons per hour granulation process according to this invention, substantially dry seed material having a particle size of -14 to +28 mesh is fed at a rate of 0.2 tons/hr to the 12:30-2:30 position of a pan granulator. Binder solution is sprayed onto the granulator at about the 3:00 position at a rate of 1.05 tons/hr (0.75 t/hr of which is water). Powder material having a particle size of 90% -200 mesh is fed at a rate of 10.51 t/hr to the 5:00 position of the granulator. Enlarged particulate product is obtained as discharge from the pan at 90% yield. The product, before drying, contains 0.33 t/hr +5 mesh material; 10 t/hr -5 to +10 mesh material; 0.33 t/hr -10 to +14 mesh material; 0.17 t/hr -14 to +28 mesh material; 0.50 t/hr -28 mesh material; 0.75 t/hr water and binder of which 0.33 t/hr is binder solids. Unaccountable dust losses amount to 1%.

That completes the process description for material less than five mesh. It will be evident that the process of this invention makes it possible to prepare products having a narrow size distribution in high yield by controlled granule initiation with seeding and controlled granule growth through proper segregation leading to a stable granulation bed.

A similar but different circuit can be employed for producing granules greater than 5 mesh. Granules in the size of 1/2" and larger can be produced in this circuit by the addition of a rubber lined granulator located between the pan and the dryer.

Green balls of say -5 to +8 mesh are produced on the pan and the granulation is continued in the drum. In the same manner that seed crystals were used as the basis for producing normal sized granules, the strong and high density green balls from the pan act as a core for additional material to be added by means of drum granulation in some cases. A moving bed dryer with progressive temperature zones is usually needed to ensure that green balls do not fracture during the drying process. This two step tandem approach avoids high operating costs of multiple low yield drying steps as well as avoiding high capital costs through the efficient use of equipment. If say 5-10 mesh material is available as a seed, it will be evident to those skilled in the art that this can be fed directly to the drum granulator and the mechanical circuit becomes quite simple and inexpensive. With some materials, it is necessary to use a two stage drying process to avoid spalling of the 1/2 inch particles.

In another method of producing larger 1/2 inch particles, two granulating pans are used in series with 5-8 mesh green balls fed to about the 3 o'clock position above the sprays to act as seed to be combined with additional dust. The dust is fed in at about the 5 o'clock position. Multistage drying may prove appropriate with some materials while in others, drying between pans may be needed.

In another embodiment, the granular product obtained by the process of this invention can be treated to further improve properties. For example, in the case of a water soluble crystalline salt, such as ammonium sulphate, potassium sulphate, or potash, if the granular product of this invention is treated with a hot brine wash of the same salt, such as in two or three stages in a drum granulator, and dried, the pore spaces inherent in granules of the product, sometimes referred to as void volume, become filled with the brine solute. This can lead to 5-15% w/w absorption giving very hard granules or granules with increased density. Additionally, reducing void volume in this manner significantly retards moisture uptake for more hygroscopic materials.

Granules comprised of a mixture of materials can be made in a similar manner by impregnating the granule with a different material. Upwards of about 15% w/w of the different material can be incorporated in the granule in this manner. For example, elemental sulfur can be added to potash by contacting liquid sulphur in a drum roller with potash granules to provide a fertilizer having two major nutrients. A surfactant, such as carboxylic acid, sulfonic acid or derivatives thereof, can be employed to enhance impregnation. These additives are also useful in preparing sulphur granules that form easily and disperse rapidly when exposed to moisture. Urea also be added to any pan granulated product in a similar fashion.

Many materials have been granulated with the above process/mechanical technology. A partial list includes potassium sulphate, ammonium sulphate, potassium chloride, ammonium chloride, sulphur, potash, magnesia, kaolin and soda ash. Other potential materials include coal, iron ore, various minerals, phosphates, nitrates, borates and carbonates.

Potash is a material that needs special attention during granulation, partly because of its hygroscopic nature and partly because there are about 4% impurities in red potash as produced in Saskatchewan, Canada. Some of these impurities can significantly affect granular sized product formation and handling. A number of samples of pan granulated potash (PGP) samples were tested to determine the best formulation conditions as determined by a standard potash handling test.

In the test procedure, as prepared samples were tested for degradation under ambient conditions using a standard degradation test common to the potash industry. Fresh sample was then exposed to a relative humidity (RH) of 55% at 25°C for four days and given a so-called wet degradation test carried out on a sample taken straight from the humidity chamber. It is used as a relative indicator of how robust the granules are and how well the granules handle under moist conditions. Finally, remaining PGP in the humidity chamber was dried at about 125°C, left to cool under ambient conditions and then tested for degradation. Dried degradation of samples was carried out at ambient RH of 20-30%.

Red potash using feedstock sourced at the centrifuge before the dryer pan granulates well with lignosulphonate (lignosol) binder. The as prepared product, designated Sample 1, had a degradation of about 1% in a standard test. Results for this test and others are listed in Table 1. Granular size potash is normally formed by compaction; however, degradation by a standard potash industry test is typically 6-8%. In addition to lower degradation, pan granulated potash (PGP) handles better during transport, blending and application due to the spherical nature of PGP. However, when PGP made with lignosol binder is subjected to relative humidities in the range of 50-60%, the moisture absorption can rise to 0.80 to 1.0% or more over a period of four days. The product becomes soft and loses structural integrity in less than one day at these higher humidities. When dried, PGP as in Sample 1 had a degradation of about 9%. The use of a high polarity binder and the presence of residual float amine and chlorides of calcium and magnesium were identified as potential factors affecting the behavior of PGP.

Commercial samples of compacted red product, with an initial degradation of 5-7%, absorbed between 0.05 and 0.11% moisture in four days at 55%. Compacted product showed somewhat variable moisture absorption which may be due to uneven application of anticake reagent. It remained quite strong after exposure to moisture although susceptible to caking after exposure to high humidities due to some surface structural deterioration which would promote granules sticking together and setting up. Wet degradation of compacted product was about 16% and dried degradation was about 11%. The latter sample is off-spec product by the standard potash degradation test.

If a low polarity starch based binder is employed with PGP rather than lignosol, red potash sourced at the centrifuge before the dryer, and dried at low temperature (110°C) before PGP formulation, yields Sample 2 PGP that absorbs about only 0.2% moisture after 4 days at about 55% relative humidity. This is significantly below levels for lignosol binder. Initial dry degradation was 8%, wet degradation was 10% and dried product had a degradation of 7%.

Red potash sourced at the centrifuge is known by practitioners of the art to have high levels of amine compared to potash samples sourced from the dryer exit. The initial degradation of 8% with Sample 2 is high and indicates higher amine levels could contribute to decreased granule strength of PGP. Sample 2 PGP performed as good or better than the compacted product in handling tests, even though the PGP absorbed more moisture.

Sample 3 PGP was made from red potash sourced from the dryer exit using a starch type binder. The dryers in a potash plant run at between 160°C and 220°C with typical temperatures being 190°C to 200°C. The moisture absorption with Sample 3 was 0.19% while the wet degradation was 8.4% and the degradation of dried product was 3.8%. This is noticeably improved over PGP samples made from potash taken prior to the high temperature dryer. Conventional compacted product has been through the high temperature drying and yet did not perform as well in handling tests.

Comparatively high dryer temperatures are commonly used in the potash industry to drive off amine since amine is known by practitioners of the arts to detrimentally affect compaction efficiency. The reduction of amine levels beneficially affects the handling properties of PGP.

In order to confirm the detrimental effect of residual float amine in PGP, potash taken at the centrifuge prior to the dryer was treated with agents and conditions to remove the amine. With exhaustive amine removal, PGP Sample 4, with a starch type binder for the granules, had an initial degradation of 1.2%, wet degradation of 2.6% and a dried degradation of 1.6%. Moisture absorption at 55% RH was 0.19%. Amine removal from potash has resulted in a demonstrably superior PGP product as measured by degradation tests and the well known advantages of spherical particles in the granular size range. Amine removal from potash yielded a major improvement in PGP handling tests. Comparison of as prepared degradation between Sample 2 and Sample 4 indicates that float amine removal contributes to significantly improved PGP granule strength. Float amine reduces granule strength.

By analogy with respect to granules formed by compaction, amine removal may not only improve product quality but this can improve compaction efficiency. The incorporation of a starch type binder could improve compaction efficiency and product quality. Float amine, most likely because of its unique surface properties with respect to potash, appears to cause some deleterious effects on the structural strength of potash granules. This is quite evident with the above examples of the role of the amine in the handling of PGP and the same phenomena can reasonably be expected to be present with compacted product. Indeed, the troublesome surface degradation and caking of compacted potash may well have its primary origin due to the presence of residual amine in the compacted granules rather than just the failure of anticake agents or application thereof.

Compacted product is formed under high pressure and the presence of float amine can introduce structural weakness and stress in compacted granules. These stresses can be relieved by the absorption of moisture, likely through discontinuities in the anticake surface, leading to surface rubilization of the granule and subsequent off spec product that is susceptible to caking. The attachment of the float amine to the potash particles rather than sodium chloride particles is the basis for the flotation steps used in potash processing and this affinity is the basis for interference in the handling properties of potash granules.

While the PGP product absorbs more moisture than compacted potash on a percentage basis, PGP product is stronger in the standard potash degradation test, and being spherical, will be comparatively resistant to caking when moist All PGP sampled had standard anticake and dedust applications. The PGP as per Sample 4 and others, dries out well and retains its strength. It would appear that starch type binders combine synergistically with the slimes typically found in red potash to yield an internal matrix that contributes to the support of the structural integrity of the granule. It is known to practitioners of the art that starch type material agglomerates and settles slimes in typical potash processing operations indicating an affinity of one material for the other.

White potash with starch type binders yields as prepared degradations of 3%. Wet degradation of Sample 5 was 31% while the dried degradation was 15%. When the white feedstock was subjected to an amine removal treatment as in Sample 6, the wet degradation amounted to 19% while the dried degradation was 14%. The improvement in wet degradation of white PGP indicates that amine removal treatment is beneficial. However, neither sample compares favorably with PGP made from red potash with amine removal treatment. The results with white potash feed for PGP confirm the importance of the synergistic effect of slimes and starch type binders in producing robust red PGP granules.

When a fresh portion of Sample 6 was tested wherein the sample was in a humidity chamber for twelve hours and at ambient conditions for twelve hours for a period of six days, the wet degradation was 15% while the dried degradation was 5%. It is apparent that the starch type binder is not as effective as with red product and likely undergoes some type of degradation when exposed to high humidities for extended periods. Larger amounts of binder could extend product life under humid conditions. These examples indicate care must be taken to remove as much amine as possible in formulating top quality PGP and this is preferably carried out with red potash as the feedstock.

Since the efficiency of compaction is known to be improved by some degree of amine removal, more effective amine removal, as possible with amine removal agents, should therefore yield improved compaction efficiencies. In addition, compacted product produced in this manner should have improved product quality and handling characteristics. This would be in accordance with the observations on the effects of float amine removal for PGP. The absence of amine in PGP does not alter the % of moisture absorption but amine removal does lead to more robust PGP. Similar deleterious particle surface phenomena due to the presence of float amine are expected to apply to compacted product and amine removal should lead to improved product.

Amine removal is not straightforward. When amine removal agents such as hypochlorite are used on red centrifuge cake samples taken before the dryer, the wet degradation drops to about 3.5% while the dry degradation is about 2.0% as with Sample 2. If centrifuge cake feedstock is oxidized by sodium hypochlorite and the red potash is then heated to 200°C for 24 hours to substantially remove residue amine, the results for Sample 4 are obtained where the initial degradation is 1.2%, the wet degradation is 2.6% and the dried degradation is 1.6%. Evidently, not all the float amine is readily available for removal or destruction by rapid chemical attack from an amine removal agent such as sodium hypochlorite. Several factors based on kinetics, equilibrium and phase transfer are probably influencing amine removal efficacy.

Float amine may be in the ionic ammonium form or the neutral amine form in potash processing or in some type of micelle. The pH of the process brine determines primarily the proportion of amine to ammonium form. These are in a dynamic equilibrium in solution. The ammonium form is less resistant to chemical attack and removal than the amine form. As well, comparatively non-polar neutral amine may be absorbed into residual water insoluble float oil used in the flotation step. While higher pH's of the brine favor greater portions of neutral amine which are more susceptible to rapid attack by amine removal agents, these higher pH's favor an increased fraction of amine distributed in the float oil. Effective amine removal methods need to recognize these factors. Amine in the float oil has to diffuse into the aqueous phase before the nitrogen functionality can be effectively attacked by aqueous based amine removal agents such as sodium hypochloride. Diffusion of amine from one phase to another can be slow compared to the action of amine removal agents.

Oxidation of amine prior to the dryer with, for example, sodium hypochlorite is effective since this agent provides moderate alkalinity which favors the more readily oxidizable neutral amine. The pH should be kept in the range of 6 to 9 to ensure that any float amine in the float oil can be drawn out by virtue of equilibrium with the ammonium form in the brine. Once the amine is in the aqueous ammonium-amine equilibrium, it can be more readily oxidized. Controlled residence time is needed in order to ensure maximum effectiveness of oxidizers.

Amine removal agents such as sodium hypochlorite decompose fatty acid float amines to aldehydes and ketones although some portion of nitroalkane may also form (March, Advanced Organic Chemistry, McGraw-Hill, 1977). The decomposition products of float amine treated with sodium hypochlorite do not impair the structural integrity of potash granules and residues are most likely driven from the potash under dryer conditions normal for a typical alkali halide salt.

Other amine removal agents, primarily those that react chemically in a rapid manner with the free amine, can be used to immobilize or destroy the amine and transform it to, for example, an amide or urea type structure which no longer has the characteristics of amines. Lower molecular weight organic agents which have significant water solubility can act on amine in both the aqueous phase and the float oil phase. Some organic amine removal agents can be used with inorganic agents. Alkyl acid chlorides such as acetyl chloride or acetic anhydride may react with a fatty acid float amine to produce an amide. Similarly, amine can be reacted with aryl acid chlorides. Aryl and alkyl sulphonyl chlorides such as benzene sulphonyl chloride can be reacted with amine to form a sulphonamide. A fatty acid amine reacts with isocyanates such as toluene diisocyanate to form a substituted urea. Amine may also be transformed by diazotization with nitrous acid or alkyl halides. These approaches destroy amine and therefore prevent any further deleterious effects due to amine in potash processing and product formulation. The formulation of carbamates with carbon dioxide is not useful since these decompose under heating. Carbamates however, can deactivate anticake agents. These methods are reported in March and also in Morrison and Boyd, Allyn and Bacon, 1968. In these reactions, it is preferred that the reactions be carried out on the float amine at somewhat alkaline pH conditions favoring predominately the neutral form to ensure maximum nucleophilic attacking power. Practitioners in the art will recognize that some organic amine removal agents may need somewhat different reactors and reaction conditions than inorganic amine removal systems.

The amine removal process is best carried out before the dryer. Circuits that minimize consumption of float amine are desirable in achieving improved formatting and handling of potash granules. For example, in potash processing after the slimes settling step, the potash stream may be separated by a convenient type of size classification into two streams with one being about +14 mesh and the other being about -14 mesh. The objective is to use the minimal amount of float amine on the fine fraction rather than having an overloading of float amine on the fine fraction due to a need to apply amounts determined by effective floatation of the coarse fraction. Each stream would then undergo a separate floatation step, including separate reagentization with float oil and float amine. In this manner, the stream that is about -14 mesh would receive the minimum amount of float amine and thereby reduce the amount of float amine that has to be removed during the amine removal treatment.

Amine removal agents can be applied to the fine floatation concentrate in leach tanks before the centrifuge. Amine removal agents are added along with come reclaim brine or fresh water in the repulp tanks to remove the amine and improve the grade of the potash. The -14 mesh stream is preferably fed to the main dryer dedicated to this material with a smaller dryer for the coarse material. Alternatively, the coarse fraction can be subjected to an amine removal treatment and a single dryer can be used.

The slurry from the repulp tanks is sent to the centrifuge and the solids move to the dryer. The liquor can be returned to the repulp tans to conserve amine removal agent. A bleed is needed to remove sodium chloride. Those skilled in the arts will recognize that there are other variations of this circuit which may be appropriate for a given plant.

For example, a plant may have an amine removal circuit for fines and one for coarse material. With amine removed from potash steams, dryer temperatures can be dropped significantly to perhaps 120°F. This would save considerable energy.

The screens at the dryer can now provide -14 mesh potash that has dramatically reduced amine levels and the so processed potash is most suitable for preparing granular size potash by pan granulation or compaction. Finer potash no longer needs to be sent to a costly crystallizer circuit or marketed as a lower value standard grade. With pan granulation, the potash can be simply fed to the pulverizer after addition of say binders or other materials such as micron nutrients. This enables a plant to change the product split to more highly valued granular size range product.

Alternatively, with granule formation by compaction, compaction feed can be treated after the dryer with a starch type binder solution in a mixer such that the moisture content is between 0.07% and 0.3% before being fed into the compaction circuit. Compaction product of granular size could then be fed to the dryer for final drying. Binder solution could also be fed to the potash stream before the dryer particularly if the -14 mesh fraction was dried separately. By virtue of being able to compact fine potash without the need to incorporate significant amounts of more coarse standard size range potash, the product split of the plant can be moved to more highly valued granular sized product.

A final problem that can arise with potash is the presence of chlorides of calcium and magnesium and the detrimental effects these materials have on moisture absorption by potash. These can be removed by treating the potash slurry before the dryer with soda ash resulting in the formation of calcium and magnesium carbonates which are quite inert to moisture transport phenomena.

The behavior of potash and phenomena involved in potash granule formation through pan granulation and compaction is not simple. The inventors have made every effort to provide explanations consistent with the experimental results; however the invention is not necessarily bound by these explanations.

Nonetheless, the data presented here does allow for some significant improvement in product quality for potash and processing techniques that are beneficial in the achievement of these improvements. Both product quality and processing improvements through removal of float amine enable substantive economic gains for producer and customer.

This invention makes it possible to granulate most any material. For example, plastics in a powder form that are high melting, could, with the use of appropriate solvent systems as binder solutions, be turned into granules that would be easy to handle and bulk store. Product has been successfully granulated on an 8 foot pan running at 3 T/HR, which is commercial scale, and larger volumes can readily be handled.

In summary, the invention provides:
1. A primarily room temperature process whereby fine mesh material, at 95% -150 mesh and at least 90% -200 mesh is produced by an air sweep pulverizer; this material is fed to a specially configured granulation pan at the 5:00 o'clock position along with seed crystals at the 12:30 to 2:30 o'clock position with the seed being primarily in the -14 to +28 mesh range; water or a binder solution is fed to the pan inboard of the 3 o'clock position. The seed picks up the dust and builds up in the pan bed until it is the right size and then is expelled to the dryer and product classification.
2. A drum granulator can be inserted between the pan and the dryer to make material larger than 5 mesh.
3. A composition of matter comprising nonhygroscopic binder potassium lignosuiphonate is prepared typically from potassium sulphate and calcium lignosuiphonate, although it can be prepared by potassium pulping or ion exchange between sodium, ammonium, magnesium and calcium lignosulphonate and potassium laden cation exchange resin. Alternatively nonhygroscopic binders can be made from cereal grains. These can be ground in the pulverizer and added at the 5:00 position on the pan with the particulate material. Moisture needed for granulation is then provided by water sprays, which will not plug due to the presence of binder.
4. The process can beneficially use magnesium oxide as anticake agent.

**TABLE 1**

| % Degration of Potash, 4d, 55% RH, 25°C | | | |
|---|---|---|---|
| | As Prepared | Wet | Dried |
| Sample 1 High Amine Level | 1 | - | 9 |
| Sample 2 High Amine Level | 8 | 10 | 7 |
| Sample 3 High Amine Level | - | 8.4 | 3.8 |
| Sample 4 (Exhaustive Amine Removal) | 1.2 | 2.6 | 1.6 |
| Sample 5 White Potash | 3 | 31 | 15 |
| Sample 6 White Potash | 3 | 19 | 14 |
| Compacted Amine Level | 5-7 | 16 | 11 |

## Claims

1. A process for pan granulating a particulate material, wherein the process comprises:
(a) providing particulate material having a size of about 95% -150 mesh and 90% -200 mesh or finer;
(b) feeding the particulate material from step (a) to a pan granulator containing about 1% to about 4% by weight seed material having a size of -14 to +35 mesh;
(c) feeding a binder solution to the pan granulator in an amount of about 8% to about 14% by weight and preferably 10% to 12% of the particulate material; and
treating said particulate material in said pan granulator to layer the particulate material onto the seed material to form an enlarged particulate material about 90% or more by weight of which has a particle size distribution of about -5 to about +10 mesh.

2. Process as claimed in claim 1, which further comprises drying said enlarged particulate material in a fluidized bed.

3. Process as claimed in claim 1, wherein said seed material has a size of -14 to +28 mesh.

4. Process as claimed in claim 1, wherein said seed material has a size of +20 to -28 mesh.

5. Process as claimed in claim 1, wherein said seed material is substantially dry.

6. Process as claimed in claim 1, wherein said binder is in an amount of about 0.02 to about 4% by weight of the particulate material.

7. Process as claimed in claim 1, wherein said binder is in an amount of about 0.02 to about 2% by weight of particulate material.

8. Process as claimed in claim 1, wherein said binder is in an amount of about 0.05 to about 1% by weight of particulate material.

9. Process as claimed in claim 1, wherein said enlarged particulate material has a particle size of about 90% -5 to about +10 mesh in a single pass.

10. Process of claim 1, wherein the enlarged particulate material formed is fed to a drum granulator to act as seed for producing larger particles with addition of more powder and binder sprays to yield green balls of about 1/2 inch in size.

11. Process of claim 10, wherein the enlarged particulate material formed is directed to about the 3 o'clock position of the pan granulator above the sprays to serve as seed for producing enlarged green balls of about 1/2 inch in size for subsequent pan granulation of potash.

12. Process as claimed in claim 1, wherein said particulate material contains unbound water as a binder.

13. Process as claimed in claim 1, wherein said particulate material is substantially dry or moist as needed to prevent dusting on the pan.

14. A process of pan granulating a particulate material, wherein the process comprises:
(a) feeding about 1% to about 4% by weight seed material having a size of about -14 to about +35 mesh to a rotatable pan granulator between about the 12:30-2:30 positions of the pan with the pan having pinch points at 9:00, 11:00 and 1:00;
(b) feeding about 0% to about 4% of particulate material as binder in solution to the pan granulator using spray nozzles inboard of the 3:00 position of the pan;
(c) feeding a powder material having a size of about 95% -150 mesh and about 90% -200 mesh or finer between the 5:00-9:00 positions on the pan; and
(d) rotating the pan granulator under conditions to treat the powder material in the pan to layer the particulate material onto the seed material to form an enlarged particulate material about 90% or more by weight of which has a particle size distribution of about -5 to about +10 mesh.

15. Process as claimed in claim 14, wherein the seed material has a size of about -14 to about +28 mesh.

16. Process as claimed in claim 14, wherein the seed material has a size of about +20 to about -28 mesh.

17. Process as claimed in claim 15, wherein said binder is water.

18. Process as claimed in claim 15, wherein the binder is fed to the pan granulator in an amount of about 0.02 to about 2% by weight of particulate material.

19. Process as claimed in claim 15, wherein the binder is fed to the pan granulator in an amount of about 0.05 to about 1% by weight.

20. A process of pan granulating a particulate material, wherein the process comprises:
(a) feeding about 1% to about 4% by weight seed material having a size of about -14 to about +28 mesh to a rotatable pan granulator between about the 12:30-2:30 positions of the pan;
(b) feeding about 0.5% to about 1% by weight of particulate material as binder solution to the pan granulator in-board of about the 3:00 position of the pan;
(c) feeding a powder material having a size of about 95% -150 mesh and about 90% -200 mesh or finer between the 5:00-9:00 positions on the pan; and
(d) rotating the pan granulator under conditions to treat the powder material in the pan to layer the particulate material onto the seed material to form an enlarged particulate material about 90% or greater by weight of which has a particle size distribution of about -5 to about +10 mesh.

21. Process as claimed in claim 20, wherein said powder material is selected from the group consisting of potassium sulphate, ammonium sulphate, potassium chloride, ammonium chloride, sulfur, potash, magnesia, kaolin, and soda ash.

22. Process as claimed in claim 21, which further comprises treating the enlarged particulate material in aqueous salt solution to impregnate the enlarged particulate material with solute in the solution or with such materials as molten sulphur.

23. Process as claimed in claim 20, wherein conditioning agents such as magnesium oxide, zeolites, or diatomites are used at the pulverization step and carboxylic and sulphonic acids and derivatives thereof are used for sulphur granule formulation.

24. Process as claimed in claim 20, wherein binders such as potassium lignosulphonate and cereal grains are used as non-hygroscopic binders.

25. Process as claimed in claim 1 for potash whereby amine removal agents are used on potash streams, primarily -14 mesh or less, to destroy or immobilize flotation amine association with potash streams, preferably before the main dryer, for subsequent pan granulation of potash.

26. Process as claimed in claim 25, wherein amine removal agents include oxidizers like hydrogen peroxide and sodium hypochlorite, nitrous acid, sodium sulphite, sulphur dioxide, chlorosulphonic acid, thionyl chloride, sulphonyl chloride, phosgene, and organic agents such as alkyl and aryl halides, alkyl and aryl acyl chlorides, aryl and alkyl isocyanate, aryl and alkyl isothiocyanate, and alkyl and aryl sulphonyl chlorides.

27. Process as claimed in claim 26 to prepare potash for compaction by use of amine removal agents on potash streams, preferably -14 mesh, to destroy or immobilize flotation amine associated with potash streams, preferably before the main dryer.

28. Process as claimed in claim 27, further comprising the addition of starch base or cereal grain type binder before or after the main dryer with the use of a mixer and thereafter the potash is fed to compaction circuit at about 0.07 to 0.3% moisture with return of on size product to main dryer and on to the product bins.

29. Process as claimed in claim 25 or 27, wherein the potash stream after slimes settling is classified into two streams with one about +14 mesh and one about -14 mesh, whereby these streams are fed to separate floatation steps and thereafter the -14 mesh stream is fed to reactor vessels with reclaim brine or fresh water and amine removal agents to remove amine and improve grade before this potash stream is fed to a centrifuge and soda ash washing as needed and then to a dryer and subsequent granulation.
